# EUROPEAN PATENT APPLICATION

(11) **EP 4 570 637 A1**
(43) Date of publication of application: **18.06.2025**
(21) Application number: 23939680.7
(22) Date of filing: 01.06.2023
(51) Int. Cl.: B62J 50/20, B60R 21/00, B62J 27/00, B62K 21/08, B62K 25/08

(54) **VEHICLE CONTROL DEVICE AND VEHICLE CONTROL SYSTEM**

(71) Applicant: Astemo, Ltd., Chiyoda-ku, Tokyo 1000004 (JP)
(72) Inventor: NAKAMURA, Junya, Hitachinaka-shi, Ibaraki 312-8503 (JP)
(74) Representative: Nordmeyer, Philipp Werner
(86) International application number: PCT/JP2023/020393
(87) International publication number: WO 2024/247205

(57) **Abstract**

A vehicle control device (100) is provided with: an attenuation force setting unit (71) that sets the attenuation force of an attenuation device (80) that attenuates vibration of a vehicle (10); and a notification function addition unit (72) that adds a notification function to the attenuation device (80) by changing the attenuation force set by the attenuation force setting unit (71) a plurality of times. Preferably, the vehicle control device (100) further comprises a notification determination unit (90) that determines, on the basis of a signal from a sensor device (40), whether or not to send a notification to a driver. More preferably, the vehicle control device (100) further comprises a behavior generation control unit (55) that generates a forced behavior in the vehicle (10) when the notification determination unit (90) determines that a notification should be sent to the driver.

## Description

### TECHNICAL FIELD

The present invention relates to a vehicle control device that causes a damping device that damps a vibration of a vehicle to have a notification function by controlling a damping force of the damping device, and a vehicle control system including the vehicle control device and the damping device.

### BACKGROUND ART

In a vehicle, for example, a straddle type vehicle such as a motorcycle, for example, Patent Literature 1 discloses a damper warning device that reduces a damping force of an electronically controlled steering damper to issue a warning. By lowering the damping force, a driver is given an artificial impression that a grip on a road surface decreases. In addition to the decrease in the damping force, it is preferable to further include a vibration warning device that performs a warning by causing a plurality of vibrators to vibrate. Each of the vibrators is a dedicated vibrator or an ABS modulator.

### CITATION LIST

### PATENT LITERATURE

Patent Literature 1: JP6424390B (claims 1, 2, and 4 and paragraphs 0006, 0029, 0030, and 0031)

### SUMMARY OF INVENTION

### TECHNICAL PROBLEM

Depending on the driver, the notification function (physical sensation) may not be sufficient only by decreasing the damping force (a vibrator may also be required). Depending on an installation location of a vibrator on a motorcycle, if a contact point between a body of a rider and the vibrator is not uniform during riding, the rider may not be able to fully feel a vibration of the vibrator.

An object of the present invention is to provide a vehicle control device capable of improving a notification function (physical sensation). Another object of the present invention will become apparent to a person skilled in the art by referring to an aspect and a preferred embodiment described below and the accompanying drawings.

### SOLUTION TO PROBLEM

In order to easily understand an outline of the present invention, an aspect according to the present invention will be described below.

According to an aspect of the present invention, a vehicle control device includes:
a damping force setting unit configured to set a damping force of a damping device that damps a vibration of a vehicle; and
a notification function addition unit configured to add a notification function to the damping device by changing the damping force set by the damping force setting unit a plurality of times.

According to the above aspect, by repeatedly changing the damping force of the damping device, preferably by increasing and decreasing the damping force or by decreasing and increasing the damping force, a vibration-like sensation can be transmitted to a driver of the vehicle, thereby improving the notification function of the damping device.

A person skilled in the art will easily understand that the aspect according to the present invention exemplified above can be further changed without departing from the spirit of the present invention.

### BRIEF DESCRIPTION OF DRAWINGS

[FIG. 1] FIG. 1 is a schematic configuration diagram of a vehicle control device and a vehicle control system.
[FIG. 2] (A) and (B) of FIG. 2 are diagrams of respectively illustrating a timing at which a forcible behavior is generated in a vehicle and a timing at which a damping force set by a damping force setting unit is changed, and (C) of FIG. 2 is a diagram of illustrating a notification function that is caused by a forcible behavior, specifically, forcible pitching and a change in the damping force.

### DESCRIPTION OF EMBODIMENTS

The best embodiment to be described below is used to easily understand the present invention. Therefore, it should be noted that a person skilled in the art does not unduly limit the present invention by an embodiment described below.

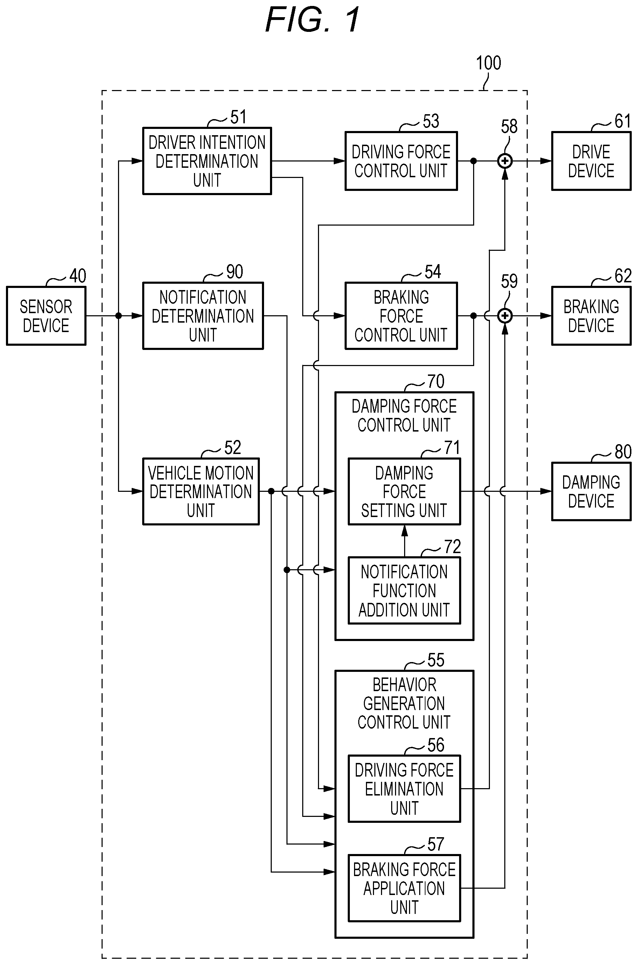

FIG. 1 is a schematic configuration diagram of a vehicle control device and a vehicle control system. As illustrated in FIG. 1, a vehicle control device 100 includes a damping force control unit 70 that controls a damping force of a damping device 80 that damps a vibration of a vehicle, and the vehicle control system may include, for example, the vehicle control device 100 and the damping device 80. Here, the vehicle control system may further include other devices, for example, a sensor device 40, and the vehicle control device 100 may further include other units, for example, a notification determination unit 90. Those skilled in the art can refer to the vehicle control device 100 as an electronic control unit (ECU).

In FIG. 1, the vehicle control device 100 or the damping force control unit 70 includes a damping force setting unit 71 that sets the damping force (predetermined damping force), and a notification function addition unit 72 that changes the damping force (predetermined damping force) set by the damping force setting unit 71, and typically adds a notification function (typically a change sensation function or a vibration function) to the damping device 80 by periodically changing the damping force in a rectangular wave form based on a predetermined damping force. The vehicle control device 100 or the vehicle control system can notify the driver of the vehicle using the damping device 80 mounted on the vehicle in the related art.

The damping device 80 constitutes a suspension together with a suspension spring, the damping device 80 has a function of preventing a vibration of the suspension spring, and for example, a hydraulic type can be adopted. For example, the hydraulic damping device 80 includes a variable damping force mechanism including an electric actuator (for example, a solenoid valve) capable of changing a degree of limitation of a flow rate of a flow passage through which oil passes. The damping force control unit 70 can determine a control current (damping force control amount) of the solenoid valve and output the control current to the damping device 80. The method for controlling the damping force of the damping device 80 is well known, and thus a description thereof is omitted in this specification.

In consideration of riding comfort, the damping force setting unit 71 may set or fix the damping force (predetermined damping force) according to a set value of hard setting, soft setting, or the like, or may set or change a damping force (predetermined damping force) to be a basis in accordance with a vehicle state such as a speed of the vehicle, a motion (movement) of the vehicle, or the like.

The vehicle control device 100 can input a signal from the sensor device 40. The sensor device 40 includes at least one sensor, and typically has a plurality of sensors, and sensor values detected by the sensors are input to the vehicle control device 100. The vehicle control device 100 preferably further includes the notification determination unit 90 that determines whether to execute a notification to the driver based on the signal from the sensor device 40. A type of notification may be any type, and is not limited to this. For example, the notification determination unit 90 may adopt a notification related to an advanced driver-assistance systems (ADAS).

As an example, the notification determination unit 90 determines a degree of proximity between the vehicle and an obstacle around the vehicle in order to achieve safety of the driver, and determines to execute the notification to the driver when the degree of proximity is equal to or greater than a predetermined value. The sensor device 40, for example, a camera acquires an image for sensing a condition around the vehicle, and the notification determination unit 90 can analyze the image to determine the proximity to the obstacle. The notification determination unit 90 can output a signal at a timing when the execution of the notification to the driver is necessary. The damping force control unit 70 or the notification function addition unit 72 can change the damping force (predetermined damping force) set by the damping force setting unit 71 based on the signal from the notification determination unit 90, and add the notification function to the damping device 80.

When the notification determination unit 90 determines that the notification is to be executed by the driver, the vehicle control device 100 preferably further includes a behavior generation control unit 55 that generates a forcible behavior in the vehicle. As an example, the behavior generation control unit 55 changes a speed of the vehicle. As the speed of the vehicle changes, movement occurs in the vehicle, that is, in the suspension, and while the damping force of the damping device 80 changes, a change in the damping force is easily felt in response to the movement of the vehicle or suspension. In other words, when the vehicle is traveling steadily at a constant speed, there is little movement in the suspension, but by generating the forcible behavior in the vehicle, the driver can reliably feel an increase or a decrease in the damping force.

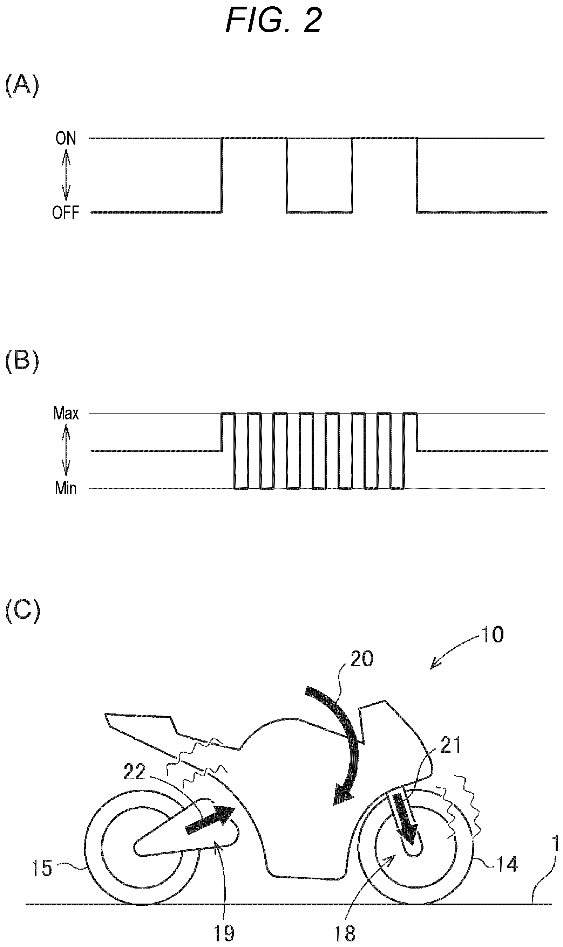

(A) and (B) of FIG. 2 are diagrams of respectively illustrating a timing at which a forcible behavior is generated in the vehicle and a timing at which the damping force set by the damping force setting unit 71 is changed, and (C) of FIG. 2 is a diagram of illustrating a notification function that is caused by the forcible behavior, specifically, forcible pitching and the change in the damping force.

Hereinafter, an operation example in which the behavior generation control unit 55 controls, for example, a braking device 62 to cause the vehicle to decelerate while the notification function addition unit 72 changes the damping force will be described. First, when the notification determination unit 90 determines to execute the notification to the driver, the notification function addition unit 72 increases or decreases the damping force based on the damping force (predetermined damping force) set by the damping force setting unit 71. Specifically, as illustrated in (B) of FIG. 2, the notification function addition unit 72 periodically changes or increases or decreases the damping force based on the damping force (predetermined damping force), and changes the damping force, for example, in a rectangular wave form.

When the notification determination unit 90 determines to execute the notification to the driver, the behavior generation control unit 55 or a braking force application unit 57 can turn on operation of the braking device 62. As illustrated in (A) of FIG. 2, at a timing when the damping force changes, the behavior generation control unit 55 can cause, for example, the braking force application unit 57 to output a braking force application amount (predetermined amount) to the braking device 62 so as to automatically reduce the speed of the vehicle for only a first predetermined period. Next, the behavior generation control unit 55 can cause, for example, the braking force application unit 57 to output the braking force application amount (zero) to the braking device 62 so as to stop the reduction of the speed of the vehicle for only a second predetermined period immediately after the first predetermined period elapses. Next, the behavior generation control unit 55 can cause, for example, the braking force application unit 57 to output the braking force application amount (predetermined amount) to the braking device 62 so as to resume the reduction of the speed of the vehicle for only a third predetermined period immediately after the second predetermined period elapses.

When the damping force is changed periodically, a frequency at which a magnitude of the damping force changes is preferably between 10 Hz and 15 Hz. As illustrated in (A) and (B) of FIG. 2, a frequency at which the vehicle brake is turned on/off is lower than the frequency at which the damping force is changed. A numerical value of the frequency is an example and can be appropriately set so as to improve the notification function (physical sensation) of the damping device 80. Further, when the damping force is periodically changed a plurality of times, the damping force may be changed between a minimum value and a maximum value of the damping force in at least one of the plurality of changes (preferably all of the changes), and the notification function (physical sensation) of the damping device 80 may be maximized.

As illustrated in (C) FIG. 2, when the braking device 62 is turned on, the speed of a vehicle 10 decreases, a front suspension 18 on a front wheel 14 side of the vehicle 10 contracts (arrow 21), a rear suspension 19 on a rear wheel 15 side expands (arrow 22), and as a result, pitching occurs such that the front wheel 14 side of the vehicle 10 sinks (arrow 20). Since the suspensions move in this manner, a change in the damping force is easily felt while the damping force of the damping device 80 changes.

In order to cause the vehicle 10 to pitch, for example to slow down the speed of the vehicle 10, a fuel supplied to an engine of the vehicle 10 may be cut instead of applying the brake of the vehicle 10. Specifically, when the notification determination unit 90 determines to execute the notification to the driver, the behavior generation control unit 55 or a driving force elimination unit 56 can reduce an operation (rotation speed) of a drive device 61 (engine). The behavior generation control unit 55 can cause, for example, the driving force elimination unit 56 to output a driving force elimination amount (predetermined amount) to the drive device 61 so as to automatically reduce the speed of the vehicle for only a first predetermined period. Next, the behavior generation control unit 55 can cause, for example, the driving force elimination unit 56 to output the driving force elimination amount (zero) to the drive device 61 so as to stop the reduction of the speed of the vehicle for only a second predetermined period immediately after the first predetermined period elapses. Next, the behavior generation control unit 55 can cause, for example, the driving force elimination unit 56 to output the driving force elimination amount (predetermined amount) to the drive device 61 so as to resume the reduction of the speed of the vehicle for only a third predetermined period immediately after the second predetermined period elapses.

In order to cause the vehicle 10 to pitch, the behavior generation control unit 55 may combine the brake and the fuel cut. Further, in order to cause the vehicle 10 to pitch, the behavior generation control unit 55 may increase an amount of fuel so as to increase the speed of the vehicle 10. The behavior generation control unit 55 may adjust control of the vehicle 10 so as to generate the forcible behavior in the vehicle 10, such as pitching, or to move the suspension. The vehicle control device 100 may further include a vehicle motion determination unit 52 that determines whether the vehicle is experiencing a behavior such as pitching and/or an extent of the behavior, and when no behavior is occurring or the behavior is small, the behavior generation control unit 55 may be controlled so as to forcibly cause the behavior to occur or to intensify the behavior.

Hereinafter, a configuration example of the vehicle control device 100 in FIG. 1 will be described. As an example, the sensor device 40 includes an accelerator position sensor (not shown) that detects an operation amount or an opening degree of an accelerator. When the driver operates the accelerator to accelerate the vehicle 10, a driving force control unit 53 can output a driving force control amount to the drive device 61 such that a driving force corresponding to an intention of the driver is generated in the drive device 61.

In FIG. 1, the vehicle control device 100 may include a driver intention determination unit 51 which can determine whether the driver operates the accelerator, a brake pedal, or the like. The driver intention determination unit 51 can output a sense value from the sensor device 40 according to the operation of the driver to the driving force control unit 53 and a braking force control unit 54.

In FIG. 1, when the driver operates the brake pedal (not shown) to decelerate the vehicle 10, the braking force control unit 54 can output a braking force control amount to the braking device 62 so as to cause the braking device 62 to generate a braking force according to the intention of the driver.

In FIG. 1, the vehicle control device 100 may further include addition units 58 and 59. In other words, when the driver operates the accelerator to instruct the vehicle 10 to move, the driving force elimination unit 56 may output the driving force elimination amount (change in the driving force) that offsets the driving force control amount from the driving force control unit 53, and cut off the fuel to the engine. Further, when the driver operates the brake pedal to instruct the vehicle 10 to decelerate, the braking force application unit 57 may output the braking force application amount (change in the braking force) that increases the braking force control amount from the braking force control unit 54, and enhance effectiveness of the brake.

The present invention is not limited to the exemplary embodiment described above, and a person skilled in the art can easily change the exemplary embodiment described above to the scope included in the claims.

### REFERENCE SIGNS LIST

1 road surface
10 vehicle
14 front wheel
15 rear wheel
18 front suspension
19 rear suspension
40 sensor device
51 driver intention determination unit
52 vehicle motion determination unit
53 driving force control unit
54 braking force control unit
55 behavior generation control unit
56 driving force elimination unit
57 braking force application unit
58, 59 addition unit
61 drive device
62 braking device
70 damping force control unit
71 damping force setting unit
72 notification function addition unit
80 damping device
90 notification determination unit
100 vehicle control device

## Claims

1. A vehicle control device comprising:
a damping force setting unit configured to set a damping force of a damping device that damps a vibration of a vehicle; and
a notification function addition unit configured to add a notification function to the damping device by changing the damping force set by the damping force setting unit a plurality of times.

2. The vehicle control device according to claim 1, further comprising:
a notification determination unit configured to determine whether to execute a notification to a driver based on a signal from a sensor device, wherein
when the notification determination unit determines to execute the notification to the driver, the notification function addition unit changes the damping force.

3. The vehicle control device according to claim 2, wherein
the notification determination unit determines a degree of proximity between the vehicle and an obstacle around the vehicle, and when the degree of proximity is equal to or greater than a predetermined value, determines to execute the notification to the driver.

4. The vehicle control device according to claim 2, further comprising:
a behavior generation control unit configured to generate a forcible behavior in the vehicle when the notification determination unit determines to execute the notification to the driver.

5. The vehicle control device according to claim 4, wherein
the behavior generation control unit changes a speed of the vehicle only for a first predetermined period.

6. The vehicle control device according to claim 5, wherein
the behavior generation control unit
automatically changes the speed of the vehicle only for the first predetermined period, and stops the automatic change only for a second predetermined period immediately after the first predetermined period elapses, and
resumes the automatic change only for a third predetermined period immediately after the second predetermined period elapses.

7. The vehicle control device according to claim 5, wherein
the behavior generation control unit changes the speed of the vehicle by automatically controlling at least one of a change in a braking force of the vehicle and a change in a driving force of the vehicle.

8. The vehicle control device according to claim 1, wherein
when the damping force is changed a plurality of times, the damping force changes between a minimum value and a maximum value of the damping force in at least one of the plurality of changes.

9. The vehicle control device according to claim 1, wherein
when the damping force is periodically changed, a frequency at which a magnitude of the damping force changes is between 10 Hz and 15 Hz.

10. A vehicle control system comprising:
a damping device configured to damp a vibration of a vehicle; and
a vehicle control device including a damping force setting unit that sets a damping force of the damping device, wherein
the vehicle control device further includes a notification function addition unit that adds a notification function to the damping device by changing the damping force set by the damping force setting unit a plurality of times.
